# EUROPEAN PATENT SPECIFICATION

(11) **EP 0 536 241 B1**
(45) Date of publication and mention of the grant of the patent: **15.03.1995**
(21) Application number: 91912219.2
(22) Date of filing: 24.06.1991
(51) Int. Cl.: C02F 3/20, B01F 3/04

(54) **FLUID SUPPLY DEVICE**
EINRICHTUNG FÜR FLUIDZUFUHR
DISPOSITIF D'AMENEE DE FLUIDE

(30) Priority: 23.06.1990 GB 9014028; 24.10.1990 GB 9023179; 08.11.1990 GB 9024311
(43) Date of publication of application: 14.04.1993
(73) Proprietor: DUNLOP LIMITED, London SW1P 2PL (GB)
(72) Inventor: SLATER, Christopher, John, Grimsby DN32 0BW (GB); KERR, Richard, Lincolnshire LN11 8EU (GB); THATCHER, Keith, Lincolnshire LN11 8UD (GB)
(74) Representative: Badger, John Raymond
(86) International application number: GB9101020
(87) International publication number: WO9200249

(56) References cited:
- FR-A- 2 409 083
- GB-A- 2 065 094
- GB-A- 2 156 941

## Description

This invention relates to a method of and apparatus for providing a controlled supply of fluid such as air and in particular, although not exclusively, for the aeration of liquid waste material to promote and sustain bacteriological action.

In many processes for the secondary treatment of sewerage and like liquid waste material it is common to provide an aeration phase in which following a coarse filtration to remove solids the resulting so-called sludge of liquid containing small particles of waste matter is treated in an activated sludge tank. In this tank the sludge is subject to aeration to promote proper functioning of the specially grown bacteria which feed on the waste particles.

To provide the required high level of aeration the sludge tank floor has secured thereto a network of pipes each provided at intervals with outlet diffusers. The diffusers are constructed normally to allow air to pass from a pipe into the sludge and to resist the flow of sludge into the diffuser and pipework, especially at such times as the pipework is not pressurised, since that inflow could seriously impede the airflow path.

The conventional network of pipes and diffusers is capable of satisfactory operation so far as concerns achieving a diffused supply of air but it is expensive to provide and install. Thus pipework needs to be of a corrosion resistant material such as stainless steel and care needs to be taken during installation to properly test the system before filling the tank with sludge since subsequent remedial work is expensive.

The expense of remedial work, which involves a need first to drain and then clean the tank and associated pipework, applies also to subsequent occasions when routine maintenance or emergency repair work is needed. It is necessary to decommission a tank for several days and this can cause significant operational problems especially if the spare capacity of neighbouring tanks is limited.

The present invention seeks to provide an improved method of and apparatus for providing a controlled supply of gas or air, and to a method of and apparatus for aeration of liquid waste material in which the aforementioned disadvantage of the prior art are mitigated or overcome.

In accordance with one of its aspects the present invention provides a fluid supply device for the controlled supply of fluid comprising a plurality of interconnected diffusers arranged to lie in series, flexible connection members for flexibly interconnecting successive diffusers and a fluid supply means for the supply of fluid from a source to said diffusers, said fluid supply means extending substantially in a plane containing the plurality of diffusers, each diffuser having at least an inlet port for the supply of fluid thereto and an outlet matrix having a plurality of passages through which fluid may flow, said flexible connection members providing at least in part a structural link between successive diffusers of the series whereby when one diffuser is subject to a lifting force that force is transmitted by a flexible connection member to a successive diffuser.

The invention envisages that whilst the plurality of diffusers may be arranged in a single row, typically the fluid supply device will be in the form of a flexible mat comprising a two-dimensional array of diffusers, with successive diffusers preferably being flexibly interconnected in each of two main directions of the array.

Each diffuser may have a body member associated therewith and the flexible connection members and/or fluid supply means may interconnect between and/or be supported by said body members. One body member may have one or a plurality of diffusers associated therewith.

The fluid supply device may comprise some body members which do not support a diffuser.

The body members may be arranged in a single low or in the form of a mat comprising a two-dimensional flexible array with successive body members preferably being flexibly interconnected in each of two main directions of the array.

Where the diffusers are in a two-dimensional array, the flexible connection members for forming a structural load transmitting link may provide for flexible interconnection in only one direction of the array or in two directions, which may be mutually perpendicular directions. Thus the array may be eg bi or tri-axially flexible.

The flexible connection members may be comprised by mutually engageable formations associated with successive diffusers and which, if necessary with the co-operation of a hinge pin or the like, allow successive diffusers to be flexibly interconnected. Preferably, however, the flexible connection members are comprised by flexible rope-like means, such as a rope or a reinforced hose. The rope-like means may be of a long length and extend continuously through an aligned series of diffusers or individual lengths may be employed to interconnect or provide at least a part of the connection between only a successive pair of diffusers. Particularly when the rope-like means extends continuously and is comprised by reinforced hose it may be employed also to serve at least in part as said fluid supply means.

The fluid supply means does not need to be comprised by a flexible hose which serves as a structural load transmitting link. It may be comprised by a hose which may extend parallel with the direction in which the series of diffusers lie in series, or at an angle thereto in the case of a two-dimensional array of diffusers. The hose may interconnect the diffusers in a series arrangement or may be provided with spur portions whereby each of the series of diffusers is individually supplied direct from a supply hose. The fluid supply means may be embedded in or secured to the surface of a body member.

Successive diffusers may be arranged to lie in series directly adjacent one another or a successive pair may be spaced apart by one or more intervening spacer elements. Preferably the spacer element(s) and diffusers each comprise body portions of substantially similar form thereby to provide a degree of uniformity to the shape and flex properties of the resulting fluid supply device.

In the case especially of a fluid supply device for use underwater the spacer elements may comprise a body portion of or which contains a ballast material such as a concrete thereby to act as an anchor and to counteract any inherent buoyancy of the diffuser and other structure of the fluid supply device. One or more diffusers may, however, additionally or alternatively comprise a body portion of or which contains ballast material.

In the case of a fluid supply device of a two-dimensional array type of construction the diffusers may be arranged in one or more rows and spacer elements may be arranged in one or more other rows. Alternatively or additionally the array may comprise rows formed from both spacer elements and diffusers. Preferably a spacer element is connected flexibly to an adjacent spacer element or diffuser.

The diffusers and also the spacer elements preferably comprise a shell, for example a plastics shell, having one or more sidewalls apertured to allow rope means and/or fluid supply means to enter the shell. The shell may be of a two-part construction comprised for example by a pair of cup-like members having rims adapted for securing together; sidewall apertures may be defined by cut-outs in one or each of a pair of confronting rims.

Each diffuser preferably is hollow and constructed to have a fluid chamber which is of a sealed type apart from connection to one or more fluid supply pipes and an outlet comprised by said outlet matrix. When the diffuser has a hollow body, e g when it comprises an outer shell, that body may define at least a part of the fluid chamber with sealing means being provided as necessary to create a seal where a fluid supply pipe passes through the wall of the body, and a seal being provided between shell parts in the case of a multi-part shell body in which the adjacent shell rims are exposed to the fluid chamber.

In an alternative construction a fluid chamber may be provided in the form, for example, of a flexible bag which may be located within a protective plastics shell or like hollow diffuser body and have one or more fluid supply pipes and an outlet matrix sealingly secured thereto.

The rope-like means and/or fluid supply pipes may be embedded in concrete or other ballast material forming the body or contained in the shell of a diffuser or spacer element. In the case of a fluid supply pipe, a portion of the pipe may extend through and be sealingly embedded in the ballast material and have an end which is exposed at a surface of the ballast material for communication with the fluid chamber.

In a further alternative construction a fluid supply pipe may be arranged to extend through a hollow diffuser body and a tee shape connection may be provided within the hollow body for flow of fluid from said supply pipe to the diffuser outlet matrix.

A diffuser or spacer element may comprise a shell portion in the form of a segment as described in the specification of GB 2156941A and which segment may be of circular, hexagonal or other polygonal shape as viewed in plan, and have a tapered form, or it may for example be of generally cylindrical form as described with reference to Figures 10 to 12 of GB 2212195A. A suitable shell of a two-part construction is described in the specification of co-pending U K Patent Application 9009408.7.

The outlet matrix may be in the form of a flexible membrane (e g a diaphragm which optionally may incorporate reinforcement material embedded in a matrix) and which membrane may be sealingly secured to an opening in a diffuser body where the diffuser is of a kind having a body comprised by a shell. Alternatively the outlet matrix may be substantially inflexible and may, for example, comprise a sintered ceramic element. Particularly in the case of a fluid supply device for use as an aeration mat which provides a diffused supply of fine bubbles, the outlet matrix may be of a kind comprising a flexible and extensible membrane, for example of rubber, which has been perforated with a plurality of tapered slots such that when acted upon by a pressure differential the membrane deforms to result in it becoming stretched and the slots being opened to allow passage of air therethrough and create bubbles in surrounding liquid. When a membrane of this type is subject to zero pressure differential or a small reverse differential the tapered slots close and prevent any surrounding liquid flowing through to the air supply side of the membrane. The membrane may be of or incorporate as a reinforcement a specially woven flexible textile material.

The outlet matrix may comprise a sheet of perforated and flexible material which in the absence of a pressure differential lies on and is supported by a backing plate to the periphery of which it is sealed. The backing plate is provided with an opening which may, for example, be exposed to a fluid chamber of a hollow diffuser body or which may interconnect directly a fluid supply pipe, e g via a tee piece connector.

In the case of diffusers interconnected by flexible connecting means of a rope-like type, it is particularly appropriate to provide lifting eyes or the like at ends of a row of diffusers to facilitate lifting of the assembly.

Preferably the fluid supply means is a hose having a quick release end fitting to facilitate ready connection of the diffusers to an air or other fluid supply main. It is envisaged that the fluid supply device of the present invention may be provided with two or more hose ends to facilitate ready supply of fluid to all diffusers in an array and without any significant variation of pressure between the fluid chambers of the respective diffusers.

The invention particularly envisages that each fluid chamber of a diffuser shall have a volume of at least 25% and more preferably of at least 40% of the total volume of the diffuser.

The present invention further provides a method for the diffused supply of gas to a volume of liquid in a container comprising positioning in the base of the container a plurality of mat-like fluid supply devices each comprising a plurality of flexibly interconnected diffusers and arranging those devices to cover a substantial proportion of the base of the container, each fluid supply device having an inherent negative buoyancy and a plurality of outlets for the diffused supply of gas, and providing flexible hoses and arranging said hoses to interconnect between each fluid supply device and a gas supply main located externally of the volume occupied or to be occupied by said liquid.

Preferably each fluid supply device is of a flexible kind thereby to accommodate and conform to any irregularities or non-planar regions in the base of the container. More preferably the fluid supply device is a flexible device of a kind in accordance with the present invention and comprising a plurality of discrete diffusers.

It is further preferred that each fluid supply device be provided with one or more lifting ropes or like means which when the device is in situ extend sufficiently from the base of the container so as to be terminated externally of the liquid volume and thereby be readily accessible in the event that it is required selectively to remove the fluid supply device.

The method of the invention is particularly suitable for the aeration of liquid waste material during for example a secondary phase of sewerage treatment by bacteriological action. It is further envisaged that the method of operation may encompass selective removal of one or more but not all fluid supply devices from a sludge tank for in-service maintenance or repair whilst remaining fluid supply devices facilitate continued operation of the tank and bacteriological action; the need to drain and clean the tank for servicing is thereby avoided.

Embodiments of the present invention will now be described, by way of example only, with reference to the accompanying diagrammatic drawings in which:-
- Figure 1: is a schematic plan view of a flexible aeration mat in accordance with the present invention;
- Figure 2: is a perspective view of one of the segments forming the mat of Figure 1;
- Figure 3: is a vertical part-sectional view of the segment of Figure 2;
- Figure 3A: is a plan view of the segment of Figures 2 and 3;
- Figure 4: is a vertical sectional view of another type of segment incorporated in the mat of Figure 1;
- Figure 5: is a plan view of a sludge tank incorporating a plurality of mats of the type shown in Figure 1;
- Figure 5A: is a sectional view in the direction V-V of Figure 5;
- Figure 6: shows part of the mat of Figure 1 in situ over an irregularity in the base of a tank;
- Figure 7: is a part cut away perspective view of two series of segments in accordance with another embodiment of the present invention;
- Figure 8: is a view similar to that of Figure 4 of another segment in accordance with the present invention;
- Figure 9: is a perspective view of an elongate element for an aeration mat in accordance with the present invention;
- Figure 10: shows an aeration mat comprising a plurality of the elongate elements of Figure 9 during installation over a pipe;
- Figure 11: shows a modified form of the mat of Figure 10 when in situ over a pipe;
- Figure 12: shows an interconnected pair of the elements of Figure 9;
- Figure 13: shows a perspective view of another elongate element for an aeration mat in accordance with the present invention;
- Figure 14: is a perspective view of a block type element for an aeration mat in accordance with another embodiment of the present invention; and
- Figure 15: shows an aeration mat comprising a plurality of the block elements of Figure 14.

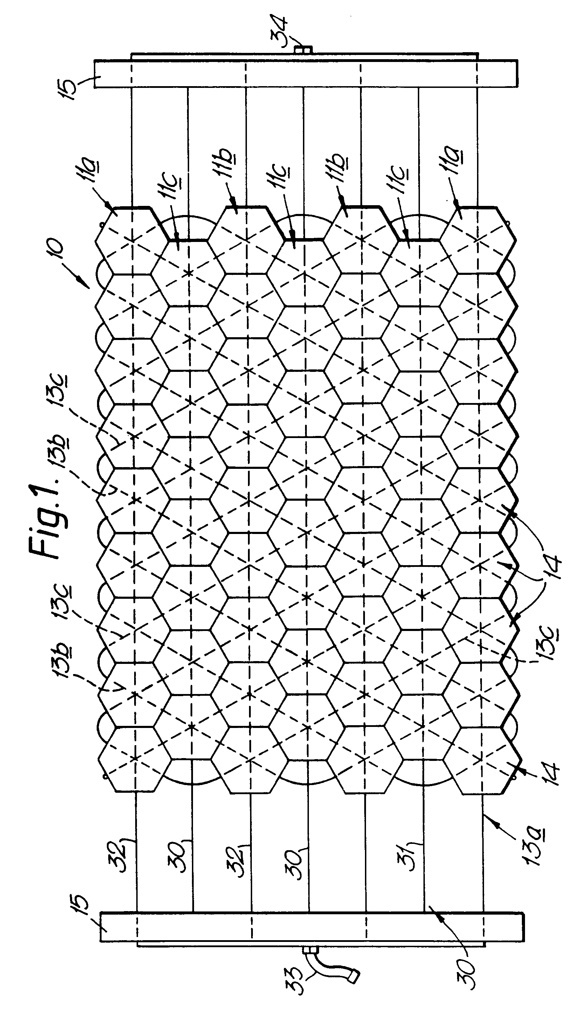

A flexible aeration mat 10 for use in the aeration of liquid waste contained in a sludge tank as part of a secondary treatment phase following initial coarse filtration of solids is shown in plan in Figure 1.

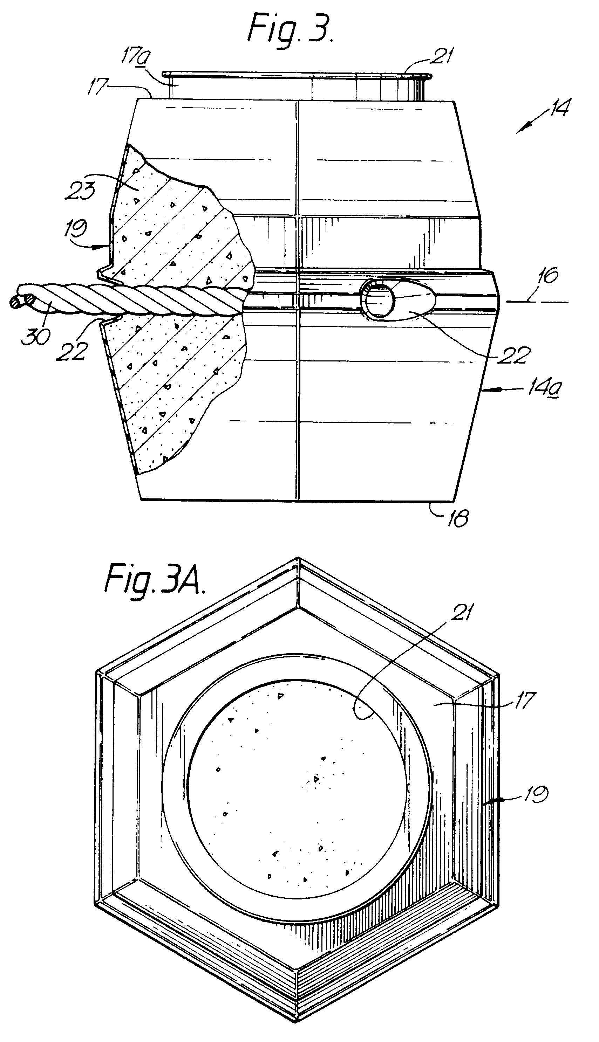

The aeration mat 10 comprises a rectangular array of hexagonal segments 14 each of a corresponding hexagonal shape as viewed in plan (see Figure 3A).

The hexagonal segments are arranged in an array comprising seven rows 11 which each extend in the longer direction of the rectangular array. The outermost rows 11a and alternate intermediate rows 11b comprise segments of a diffuser type, described in more detail below, and the other three intervening rows 11c comprise segments of an anchor type as also described in detail below.

The hexagonal segments 14 are held in abutting relationship by rope means 13a,13b,13c which extends in three symmetrically orientated directions. Each rope means extends through openings in opposing pairs of side faces of an aligned row of segments.

Ropes 30 act as rope means 13a to extend through the anchor type segments, in the direction of the length of each row 11c of those segments and terminate at their ends at rigid edge lifting bars 15, the ropes having a free length portion 31 between the shorter edges of the rectangular array of segments and the lifting bars sufficent to exceed the submerged depth of the aeration mat when in situ in a sludge tank. The rows 11a,11b of diffuser type segments are interconnected in the direction of the length of those rows by rope-like means 13a in the form of reinforced hoses 32 which also terminate at the edge lifting bars. The four hose ends at each lifting bar are interconnected to a common hose 33 or hose fitting 34 carried by a lifting bar.

The other rope-like means extends in the directions 13b,13c which lie ± 120° relative to the direction of the rope 30 and are of smaller section than the rope 30. These rope portions extend in a zig-zag manner in each of she directions 13b,13c and provide a structural interconnection between neighbouring rows 11a,11b;11c of diffuser and anchor type segments.

Each segment 14 is tapered from a median zone 16 to each outer end, an upper outer end 17 and a lower outer end 18 and comprises a blow-moulded polyethylene shell 19.

The upper end 17 of each segment has an opening 21 which either can be used to facilitate filling with a settable compound to provide ballast in the case of an anchor type segment 14a or provide an opening over which a diffuser membrane may be provided in the case of diffuser type segments 14b. The opening 21 is defined by an upstanding collar portion 17a the radially outer surface of which is provided with eg a snap-fit or screw-threaded formation (not shown) to facilitate retention of a diffuser membrane diaphragm 38 as described in more detail below.

Although the segments are arranged in abutting relationship, the flexibility of the ropes 13b,13c,30 and flexibility of the reinforced hoses 32 in combination with provision of recessed openings 22 in the sidewalls of the segments, thereby to provide an exposed, free length of rope or hose between abutting segments, and the tapered shape of the segments results in the array of segments being substantially tri-axially flexible and able to tend to conform to irregularities in a support surface.

The anchor type segments 14a are substantially wholly filled with a ballast material such as concrete 23, as illustrated by Figure 3. In these segments the main and auxiliary ropes extending therethrough are directly embedded in and thereby secured to the concrete.

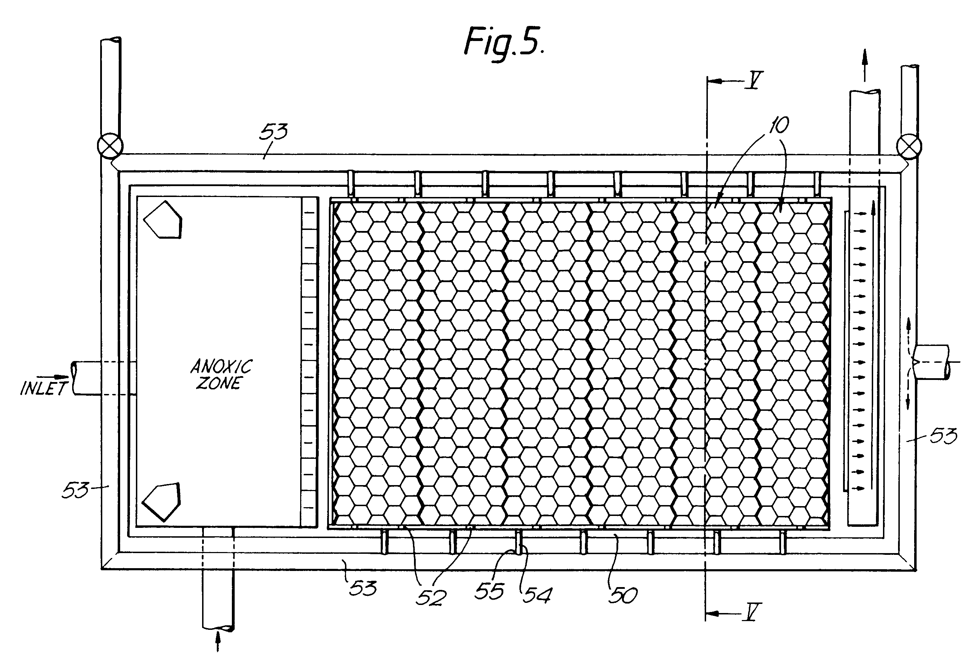

The diffuser segments 14b (see Figure 4) may each be substantially wholly unfilled but in a preferred construction each is filled to above its median plane with concrete ballast 24. (In Figure 4 the shell is shown as shorter in height than that of Figure 3; preferably it is of the same height as that of Figure 3). The auxiliary ropes extending in the directions 13b,13c are arranged to extend directly, i e rectilinearly, between opposing side faces of the shell and therefore are embedded in and secured relative to the concrete ballast; they are therefore able to provide a structural interconnection between neighbouring segments as considered in the directions of the auxiliary ropes 13b,13c.

The hose 32 extending through a diffuser segment 14b is also embedded in the concrete material 24 but does not extend rectilinear between opposing faces of the shell 19. As illustrated by Figure 4 a central portion 35 of the hose lying within the shell is deformed upwards so as to lie above the upper surface of the concrete. Subsequent to part filling of the diffuser segment with concrete the exposed central portion of the hose is cut thereby to provide openings 36 which enables air to enter the chamber 37 defined by an upper region of the shell and, as the case may be, flow from that chamber into the chamber of an adjacent diffuser segment. Prior to cutting of the central portion of the hose a sealant may be sprayed within the chamber to form an air-tight seal between the concrete and inner surface of the plastics shell.

Each diffuser membrane 38 comprises a layer of extensible rubber secured at its edges to an annular plastics ring 39 having an internal screw-thread whereby the assembly of the ring and membrane may be screwed to the upstanding collar portion 17a of the plastics shell.

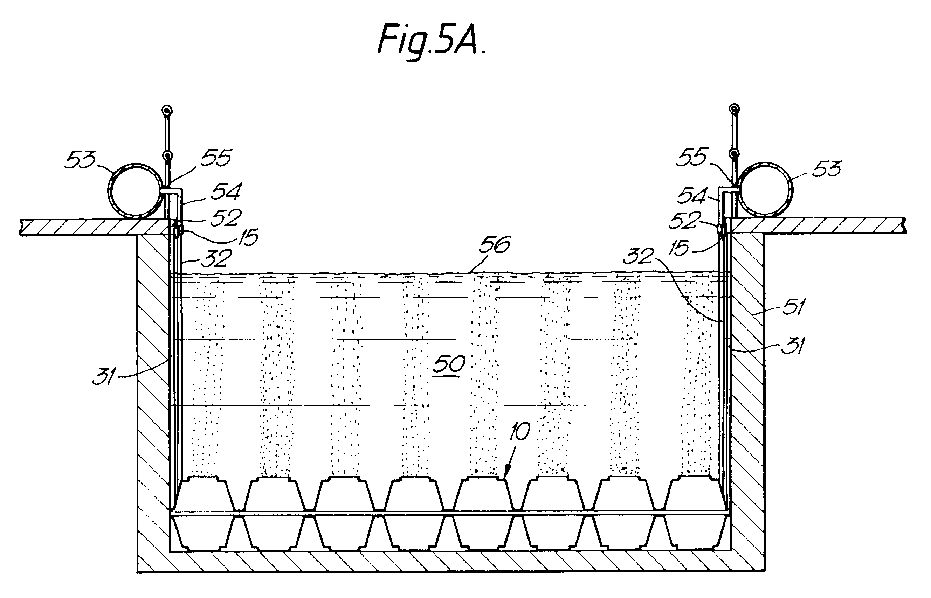

Figures 5 and 5A illustrate a part of an activated sludge tank 50 having two of the aeration mats 10 of Figure 1 lying on the base of the tank. The sidewalls 51 of the tank, at a position above the normal liquid level 56, are provided with support brackets 52 on which the edge lifting bars 15 of each aeration mat may rest when the mat is in situ and thus be readily available for attaching to a crane when a mat requires removal. An air ring main 53 extends around the sides of the tank and is provided with hose connections 54 and hose spurs 55 readily connectable to the hose and/or hose fitting respectively associated with each pair of rigid edge lifting bars of a mat.

From the foregoing it will be apparent that the invention facilitates provision of a selectively removable aeration mat which may be bereft of steel/metallic components and thereby have the advantage of avoiding any risk of sparking in the potentially explosive atmosphere that can arise above a tank. Also potential corrosion problems are avoided.

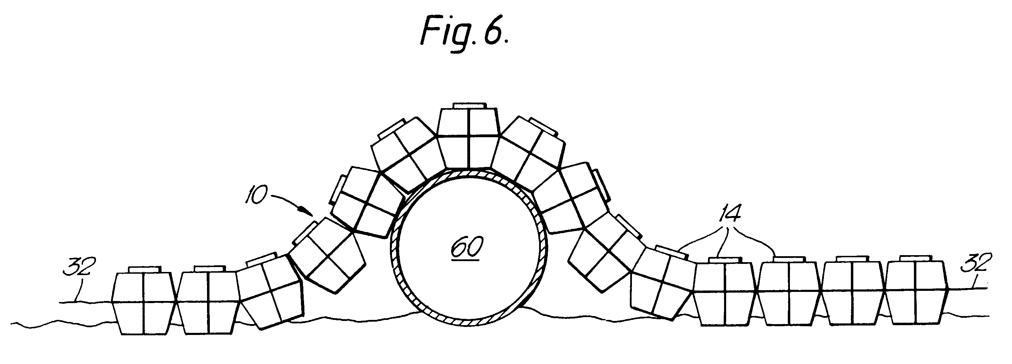

The flexibility of the aeration mat results in an ability relatively easily to conform to a contoured tank base. Thus if a tank base incorporates structure, such as pipework which presents a surface irregularity, either the aeration mat can be shaped or arranged to lie spaced from an adjacent mat so as to lie around or to one side of that structure or, as illustrated in Figure 6 in which a pipe 60 lies over the base of a tank, the aeration mat may be simply laid over that pipe and adopt a curved contour in that region.

The shells 19 of the aforedescribed segments 14 need not be of a one-piece construction but may be of a multi-part form. Each shell may, for example comprise two injection moulded polyethylene shell portions. The shell portions may be of a substantially identical shape and be constructed with rim formations which enable two portions to be snap-fitted together at a median zone.

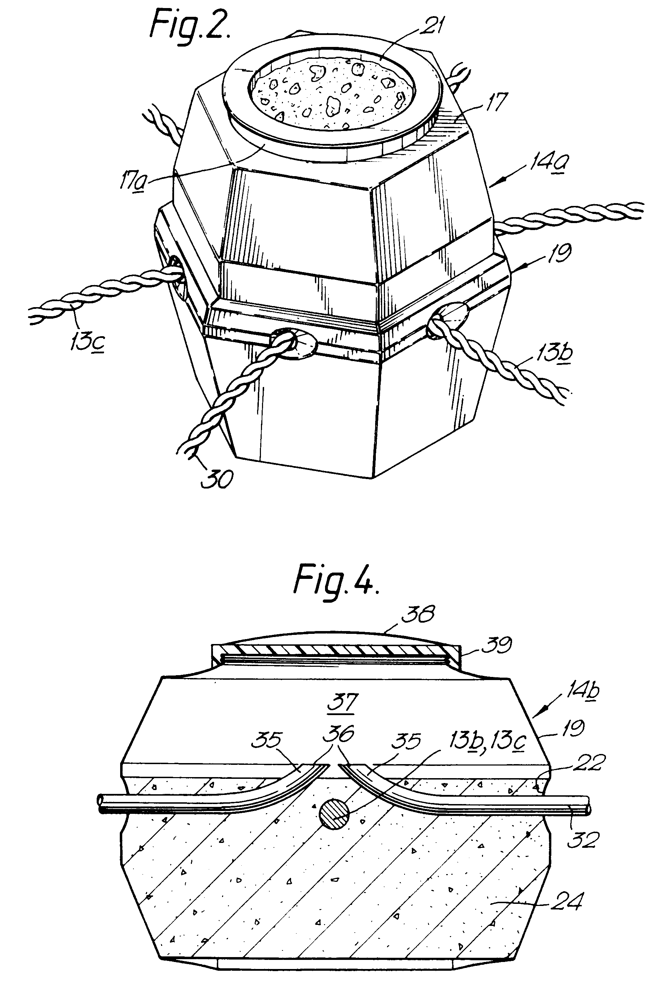

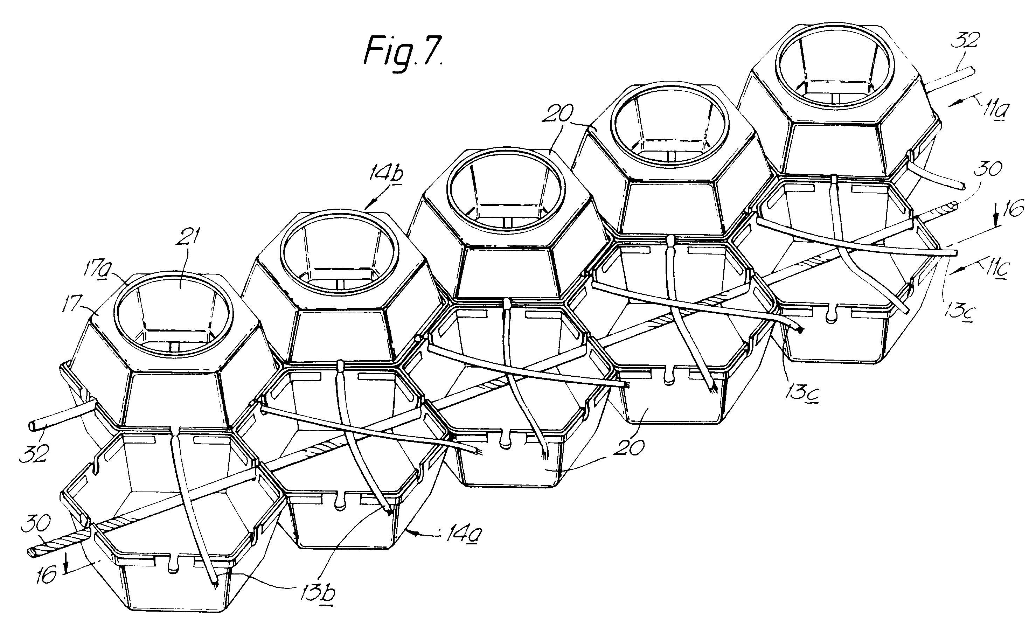

Figure 7 shows two adjacent series 11a,11c of two-part shells each comprising a pair of shell portions 20 which snap-fit together at a median zone 16. In Figure 7 features which correspond with those shown in Figures 1 to 6 are similarly referenced. The two shell portions of each shell are identical except that the upper portion has a circular section removed from its outer end to provide an opening either to facilitate filling of the shell with ballast or an opening over which an outlet matrix may be fitted.

A particularly suitable snap-fit configuration by which complementary shell portions may be secured together is described in more detail in the specification of co-pending U K Patent Application No. 9009408.7 and which teaches inter alia that the confronting formations of a pair of shells may be identical.

In the case of segments having a two-part shell the anchor type segments are not wholly filled with a single homogeneous body of concrete. Instead, the lower shell portion is filled with concrete to embed some but not all of the ropes, that concrete is then covered with a plastics sheet before snap-fitting the upper segment and completing filling of the shell with concrete. If it is wished to convert one or more of the anchor segments into diffuser segments it is possible then to unclip the upper shell portion. The upper body portion of concrete will then separate readily from the lower portion by virtue of the intervening plastics sheet, and allow one of the ropes to be replaced by an air supply hose. Subsequently the upper shell portion is refitted and a diffuser membrane and ring assembly screw-fitted to the upstanding collar portion of that upper shell portion.

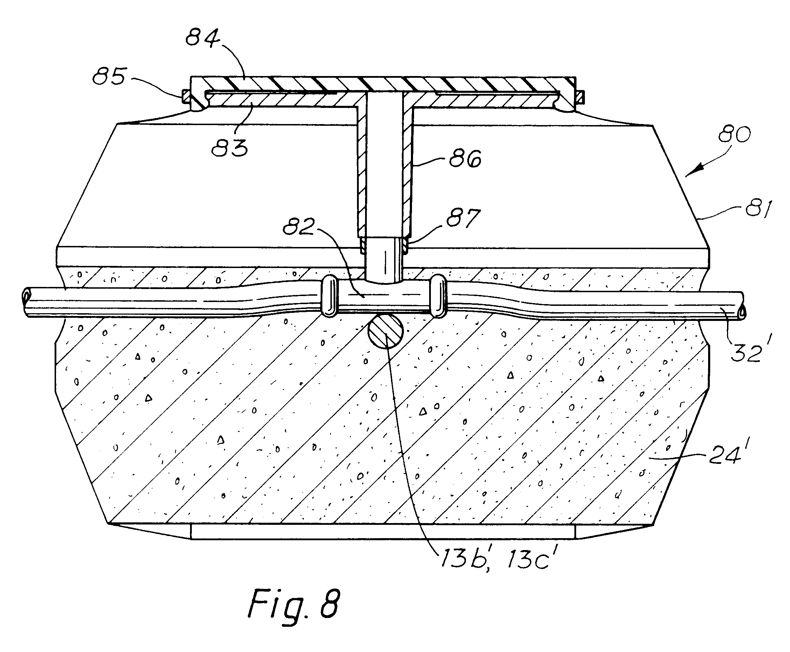

Figure 8 shows an alternative construction for a diffuser segment of a kind having a hollow body. The segment 80 has a hollow shell 81 which may be fully but in this case is part filled with concrete ballast 24' to embed auxiliary ropes 13b',13c'. The hose 32' extending through the shell 81 is provided with a T connector 82 and the hose and lower part of the connector also are embedded in the concrete ballast.

The diffuser outlet matrix comprises a plastics support plate 83 which supports a perforated and extensible rubber membrane 84. A clip 85 secures the edge of the membrane to the edge of the plate which in turn is supported by the shell 81. The plate 83 has a central screw-threaded spigot 86 which connects at its lower end 87 with the upper screw-threaded end of the T connector. There thus results a diffuser assembly in which the outlet matrix may be removed and replaced or in which a diffuser segment may be converted to a simple spacer type segment by fitting a sealing plug to the upper end of the T connector following removal of the outlet matrix.

In the assembly technique envisaged for the segment of Figure 8 the connector is embedded in concrete before the spigot 86 is secured thereto and therefore care must be taken to prevent concrete entering the connector. In an alternative construction in which the diffuser is to be substantially fully filled with concrete or a mixture of concrete and bulk material (such as hollow spheres) the diffuser backing plate 83 is fitted to the shell 81 and the spigot 86 is connected to the T connector before filling. The base of the shell, as viewed in Figure 8, is provided with an opening corresponding to the upper opening which receives the diffuser; subsequent to assembly of the diffuser plates and shells of an array, the array is inverted and the shells are filled with concrete through said base openings. When the concrete is set the array is returned to its initial orientation and the diffuser membranes are fitted.

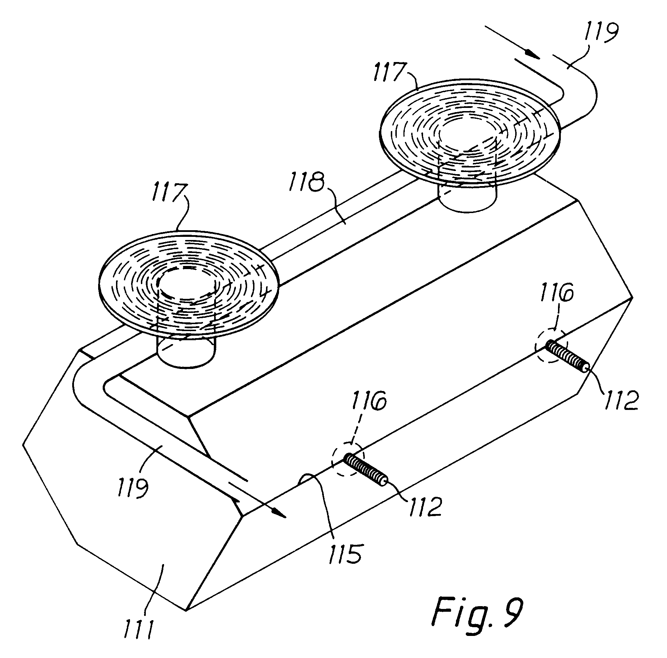

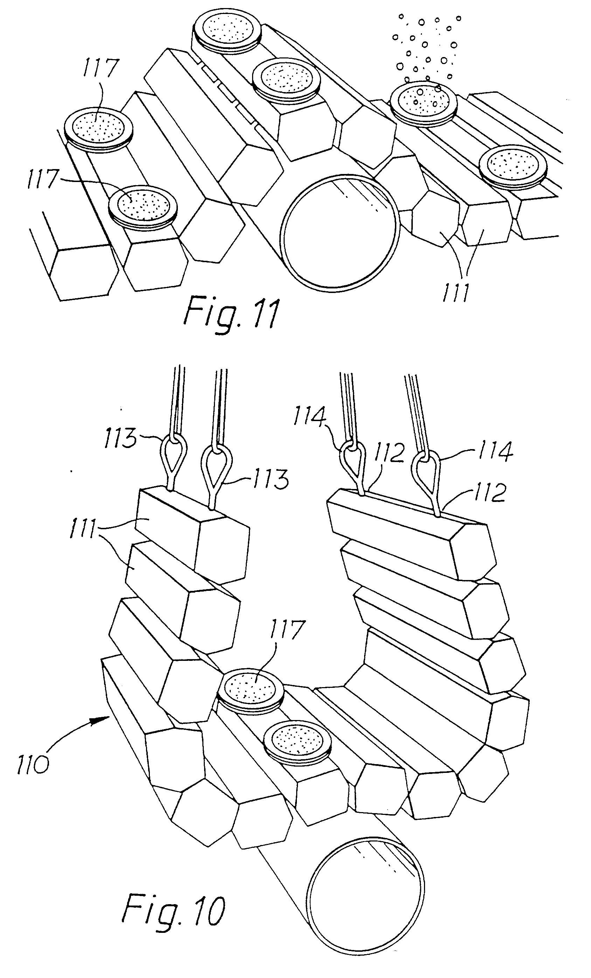

In another embodiment a flexible aeration mat 110 (see Figure 10) comprises a plurality of support bars 111 which constitutes structural body members. Each support bar is of a hexagonal cross-sectional shape (see Figure 9) and the plurality of support bars are arranged in the mat 110 to lie parallel with one another in a side-by-side series arrangement.

A pair of synthetic ropes 112 extend through the successive support bars and each rope interacts a pair of end lifting eyes 113,114. The hexagonal cross-sectional shape of each support bar enables successive support bars to be arranged with interface edges 115 in an abutting relationship in the assembled mat 110 without inhibiting the ability of one support bar to tilt (within limits imposed by the flexibility of the ropes 112) relative to an adjacent support bar; the resulting aeration mat is therefore longitudinally flexible as demonstated by the profile adopted during installation as illustrated in Figure 11.

Each support bar is formed of cast concrete in which the synthetic ropes are embedded. To facilitate bending of the ropes 112 thereby to accommodate relative movement of succesive support bars preferably each support bar is locally recessed in the region 116 surrounding a rope so that a length of each rope is exposed and unrestrained between successive support bars.

The support bar 111 shown in Figure 9 has secured thereto two diffuser units 117 each of a disc type. The two units are interconnected by a supply hose 118 the end portions 119 of which extend in opposite directions towards adjacent support bars of the series. The hose 118 is arranged to connect in series other diffuser units carried by the aeration mat. One end of the hose pipe 118 terminates at an end diffuser unit whereas the other end of the pipe is provided with a connection, typically carried by an end support bar 111 of the series, for connection to an external air supply device.

In Figure 10 for convenience there is illustrated only one support bar of a kind carrying a pair of diffuser units, and for clarity also the interconnecting air supply pipe has been omitted.

In the view of Figure 11 there is shown an arrangement in which the aeration mat comprises a plurality of spacer elements provided with a pair of the diffuser units 117. In this construction the support bars carrying diffuser units are interspaced by two or more support bars of a kind which do not carry a diffuser unit, but which nevertheless are utilised to provide location for an air supply pipe (not shown in Figure 11).

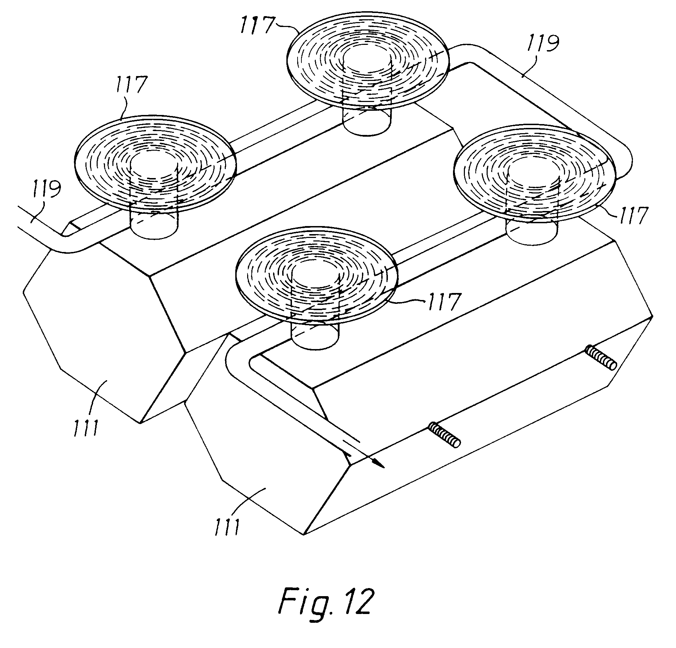

In Figure 12 there is shown a successive pair of support bars each provided with a pair of diffuser units. Figure 12 shows clearly the manner in which the supply pipe extends to interconnect the four diffuser units.

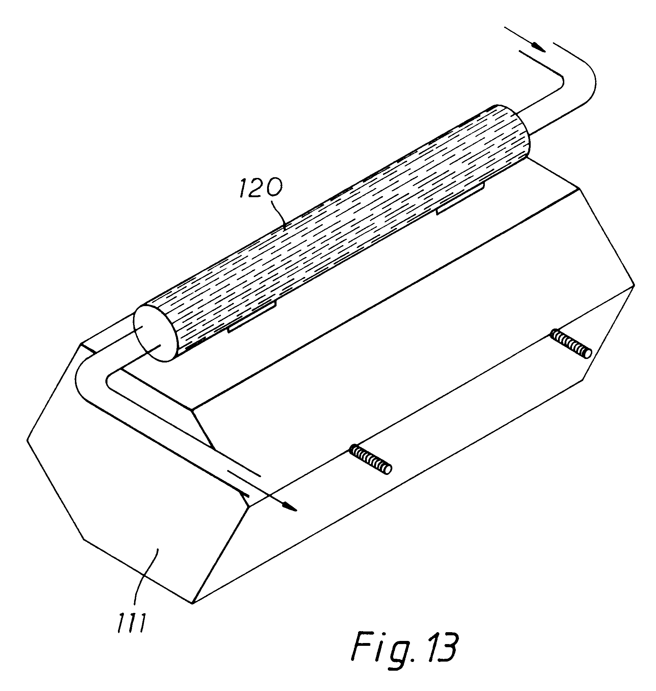

In a modified support bar construction, the circular diffuser unit 117 may be replaced by a ceramic tubular diffuser unit 120, as shown in Figure 13, or, for example, a diffuser of the kind comprising a slitted rubber sleeve supported by a tubular plastic frame unit.

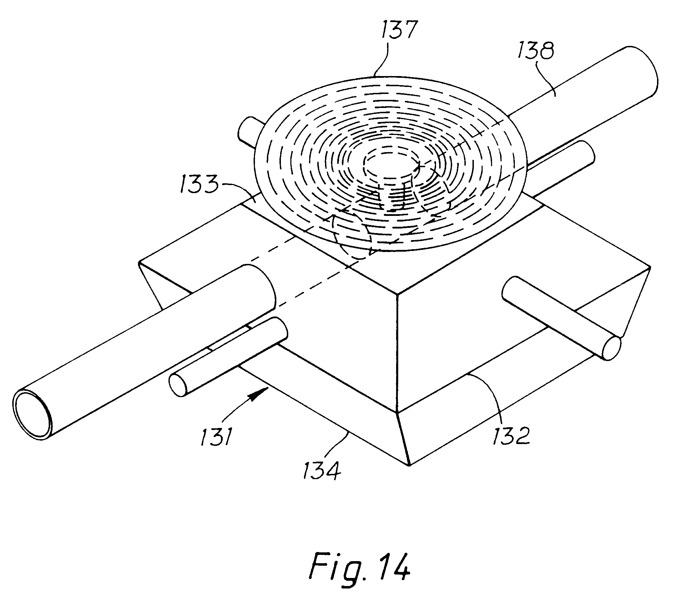

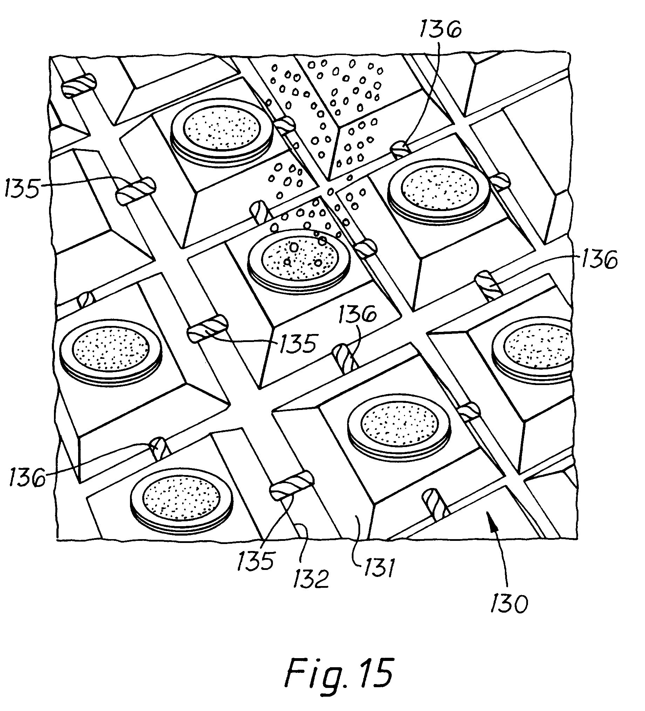

In a second embodiment of the invention, illustrated with reference to Figures 14 and 15, an aeration mat 130 comprises a two-dimensional array of support blocks 131 each of a square shape as viewed in plan.

Each support block 131 is of a double tapered form in which it has a maximum dimension, as viewed in plan, at a median plane 132 lying between upper and lower planar surfaces 133,134 and tapers from the median plane 132 to each of the surfaces 133,134. The two-dimensional array of support blocks 131 also comprises two series of synthetic ropes 135,136; the ropes 135 of one series extend in a first direction through respective rows of blocks and the ropes 136 of the other series extend correspondingly through the rows which lie perpendicular to the rows through which the ropes 135 extend.

Each support block 131 is formed from cast concrete in which the ropes are embedded. The concrete is cast to result in the ropes maintaining a spacing between neighbouring blocks whereby the flexibility of the ropes and the tapered shape of each block allows the resultant aeration mat to exhibit good flexibility.

Each support block 131 carries a disc type diffuser element 137. A plurality of supply pipes 138 are provided (shown in Figure 14 but not Figure 15) and each supply pipe 138 interconnects the diffuser elements carried by a respective row of support blocks.

The series of parallel supply pipes 138 may be interconnected in series or each may be connected to a common air supply mains thereby enabling either series or parallel distribution of air from a supply mains to the respective diffuser units.

The air supply pipes 138 may be supported by the support blocks, e g by attachment to the diffuser units which are in turn supported by the blocks (as shown in Figure 14) or may be embedded within the support blocks and have internal interconnection with the diffuser units.

It will be appreciated that the structure of the aforedescribed aeration mat, and of any modified form of aeration mats in accordance with the present invention may be utilised or adapted for purposes other than aeration in a sludge tank. Thus the structure may be used to provide aeration in fish farming environments, in the outflow of cooling water from power stations, and also supply of air or gas to other liquids. Additionally the diffuser segments may be employed to provide a diffused supply of a second liquid to a first liquid surrounding the segments.

## Claims

1. A fluid supply device for the controlled supply of fluid comprising a plurality of interconnected diffusers arranged to lie in series, flexible connection members for flexibly interconnecting successive diffusers and a fluid supply means for the supply of fluid from a source to said diffusers, said fluid supply means extending substantially in a plane containing the plurality of diffusers, each diffuser having at least an inlet port for the supply of fluid thereto and an outlet matrix having a plurality of passages through which fluid may flow, said flexible connection members providing at least in part a structural link between successive diffusers of a series whereby when one diffuser is subject to a lifting force that force is transmitted by a flexible connection member to a successive diffuser.

2. A fluid supply device according to claim 1 and comprising at least two diffusers each having a respective body member associated therewith, said flexible connection member or fluid supply means being arranged to interconnect between the body members of said at least two diffusers.

3. Fluid supply device according to claim 1 or claim 2 and comprising a plurality of diffusers arranged in a two-dimensional array, successive diffusers being flexibly interconnected in each of two main directions of the array.

4. Fluid supply device according to any one of the preceding claims wherein a diffuser comprises a shell of a two-part construction comprising a pair of cup-like members having rims adapted for securing together, sidewall apertures being defined by cut-outs in one or each of a pair of confronting rims to allow rope means and/or fluid supply means to enter the shell.

5. Fluid supply device according to any one of the preceding claims characterised in that the flexible connection members are comprised by flexible rope-like means which extend continuously through structure of each diffuser of an aligned series of diffusers.

6. Fluid supply device according to claim 5 wherein the rope-like means is comprised by a reinforced hose arranged to serve at least in part as said fluid supply means.

7. Fluid supply device according to any one of the preceding claims and comprising a plurality of diffusers arranged to lie in series with at least two successive diffusers spaced apart by one or more intervening spacer elements each having a body portion which contains a ballast material.

8. Fluid supply device according to any one of the preceding claims and comprising a two-dimensional array of diffusers arranged within a substantially rectangular shaped boundary, edge regions of the array being flexibly connected to rigid lifting means arranged alongside a pair of opposite edges of the array to facilitate lifting of the array.

9. Method for the diffused supply of gas to a volume of liquid in a container comprising positioning in the base of the container a plurality of mat-like fluid supply devices each comprising a flexibly interconnected plurality of diffusers and arranging those devices to cover a substantial proportion of the base of the container, each fluid supply device having an inherent negative buoyancy and a plurality of outlets for the diffused supply of gas, and providing flexible hoses and arranging said hoses to interconnect between each fluid supply device and a gas supply main located externally of the volume occupied or to be occupied by said liquid.

10. Method according to claim 9 wherein use is made of fluid supply devices each of a flexible kind thereby to accommodate and conform to any irregularities or non-planar regions in the base of the container.

## Patentansprüche

1. Fluidzufuhrvorrichtung zum gesteuerten Zuführen eines Fluids, umfassend eine Anzahl von miteinander verbundenen Diffusoren, die in Reihe angeordnet sind,
flexible Verbindungselemente zum flexiblen Verbinden aufeinanderfolgender Diffusoren und eine Fluidzuführungseinrichtung für die Zuführung des Fluids von einer Quelle zu den Diffusoren, wobei die Fluidzuführeinrichtung sich im wesentlichen in einer Ebene erstreckt, die die Anzahl von Diffusoren enthält, jeder Diffusor wenigstens eine Einlaßöffnung für die Zuführung des Fluids und eine Auslaßmatrix mit einer Anzahl von Durchlässen aufweist, durch die das Fluid strömen kann, und wobei die flexiblen Verbindungselemente wenigstens zum Teil ein Verbindungsbauteil zwischen aufeinanderfolgenden Diffusoren einer Reihe bilden, wodurch die Kraft durch ein flexibles Verbindungselement auf einen nachfolgenden Diffusor übertragen wird, wenn ein Diffusor einer Kraft zum Anheben ausgesetzt wird.

2. Fluidzufuhrvorrichtung nach Anspruch 1,
umfassend wenigstens zwei Diffusoren, von denen jeder ein diesem zugeordnetes Gehäuseteil aufweist, wobei das flexible Verbindungselement oder die Fluidzufuhreinrichtung so angeordnet sind, daß zwischen den Gehäuseteilen dieser wenigstens zwei Diffusoren eine Verbindung hergestellt wird.

3. Fluidzufuhrvorrichtung nach Anspruch 1 oder 2,
umfassend eine Anzahl von Diffusoren, die in einer zweidimensionalen Ausrichtung angeordnet sind, wobei aufeinanderfolgende Diffusoren in jeder der beiden Hauptrichtungen der Ausrichtung flexibel miteinander verbunden sind.

4. Fluidzufuhrvorrichtung nach einem der vorhergehenden Ansprüche, wobei ein Diffusor eine Hülle mit einem zweiteiligen Aufbau aufweist, umfassend ein Paar von tassenförmigen Teilen mit Rändern, die zur gegenseitigen Befestigung ausgebildet sind, wobei Seitenwandöffnungen durch Ausschnitte in einem oder in jedem Paar von gegenüberliegenden Rändern ausgebildet sind, um zu ermöglichen, daß ein Seil und/oder eine Fluidzufuhreinrichtung in die Hülle eingeführt werden kann.

5. Fluidzufuhrvorrichtung nach einem der vorhergehenden Ansprüche,
dadurch gekennzeichnet,
daß die flexiblen Verbindungselemente durch flexible seilartige Einrichtungen ausgebildet sind, die sich kontinuierlich durch den Aufbau jedes Diffusors einer durchgehenden Reihe von Diffusoren erstreckt.

6. Fluidzufuhrvorrichtung nach Anspruch 5,
wobei die seilähnliche Einrichtung durch einen verstärkten Schlauch ausgebildet ist, der wenigstens zum Teil als diese Fluidzufuhreinrichtung dient.

7. Fluidzufuhrvorrichtung nach einem der vorhergehenden Ansprüche, umfassend
eine Anzahl von Diffusoren, die in Reihen angeordnet sind, wobei wenigstens zwei aufeinanderfolgende Diffusoren durch eines oder mehrere dazwischen angeordnete Abstandselemente in einem Abstand voneinander angeordnet sind, von denen jedes einen Körperabschnitt aufweist, der ein Ballastmaterial enthält.

8. Fluidzufuhrvorrichtung nach einem der vorhergehenden Ansprüche, umfassend
eine zweidimensionale Ausrichtung der Diffusoren, die innerhalb einer im wesentlichen rechteckig geformten Begrenzung angeordnet sind, wobei die Randbereiche der ausgerichteten Anordnung flexibel an eine starre Hubeinrichtung angeschlossen sind, die längs eines Paares von gegenüberliegenden Rändern der ausgerichteten Anordnung positioniert sind, um das Anheben der ausgerichteten Anordnung zu erleichtern.

9. Verfahren zum diffundierten Zuführen von Gas zu einem Flüssigkeitsvolumen in einem Behälter, umfassend
das Anordnen einer Anzahl von mattenförmigen Fluidzufuhrvorrichtungen am Boden des Behälters, wobei jede dieser Vorrichtungen eine Anzahl von Diffusoren umfaßt, die flexibel miteinander verbunden sind, und Anordnen dieser Vorrichtungen so, daß ein wesentlicher Anteil des Bodens des Behälters abgedeckt wird, wobei jede Fluidzufuhrvorrichtung einen eigenen negativen Auftrieb hat und eine Anzahl von Auslässen für die diffundierte Gaszufuhr, und Vorsehen flexibler Schläuche, die so angeordnet werden, daß sie zwischen jeder Fluidzufuhrvorrichtung eine Verbindung herstellen, und wobei eine Gaszufuhreinrichtung außerhalb des Volumens angeordnet ist, das durch die Flüssigkeit eingenommen wird oder eingenommen werden soll.

10. Verfahren nach Anspruch 9,
wobei Fluidzufuhrvorrichtungen verwendet werden, von denen jede flexibel ausgebildet ist, um dadurch eine Anpassung und Angleichung an Unregelmäßigkeiten oder unebene Bereiche auf dem Boden des Behälters zu erreichen.

## Revendications

1. Dispositif d'alimentation de fluide pour l'alimentation contrôlée de fluide comprenant une pluralité de diffuseurs raccordés entre eux, propres à être disposés dans des éléments de raccordement flexibles en série pour raccorder de manière flexible des diffuseurs successifs et un moyen d'alimentation de fluide pour l'alimentation de fluide à partir d'une source vers lesdits diffuseurs, ledit moyen d'alimentation de fluide s'étendant en substance dans un plan contenant la pluralité de diffuseurs, chaque diffuseur comportant au moins une lumière d'entrée pour l'alimentation de fluide et une matrice de sortie comportant une pluralité de passages par lesquels le fluide peut s'écouler, les éléments de raccordement flexibles fournissant au moins en partie une liaison structurelle entre des diffuseurs successifs d'une série, de sorte que lorsqu'un diffuseur est soumis à une force élévatrice, cette force est transmise par un élément de raccordement flexible à un diffuseur suivant.

2. Dispositif d'alimentation de fluide suivant la revendication 1, comprenant au moins deux diffuseurs qui comportent chacun un corps respectif qui y est associé, l'élément de raccordement flexible ou le moyen d'alimentation de fluide étant prévu pour raccorder entre eux les corps desdits au moins deux diffuseurs.

3. Dispositif d'alimentation de fluide suivant la revendication 1 ou 2, comprenant une pluralité de diffuseurs disposés en un ensemble bidimensionnel, des diffuseurs successifs étant raccordes de manière flexible entre eux dans chacune de deux directions principales de l'ensemble.

4. Dispositif d'alimentation de fluide suivant l'une quelconque des revendications précédentes dans lequel un diffuseur comprend une coque d'une construction en deux parties comprenant deux éléments en forme de cuvette comportant des bords propres à être fixés l'un à l'autre, des ouvertures dans les parois latérales étant définies par des découpes dans un bord ou dans chacun de deux bords juxtaposés afin de permettre à des moyens à câbles ou à des moyens d'alimentation de fluide de pénétrer dans la coque.

5. Dispositif d'alimentation de fluide suivant l'une quelconque des revendications précédentes, caractérisé en ce que les éléments de raccordement flexibles sont constitués par des moyens à câbles flexibles qui s'étendent sans interruption à travers la structure de chaque diffuseur d'une série alignée de diffuseurs.

6. Dispositif d'alimentation de fluide suivant la revendication 5, dans lequel le moyen à câble est constitué par un tuyau flexible renforcé destiné à servir au moins en partie de moyen d'alimentation de fluide.

7. Dispositif d'alimentation de fluide suivant l'une quelconque des revendications précédentes comprenant une pluralité de diffuseurs propres à être disposés en série, au moins deux diffuseurs successifs étant espacés l'un de l'autre par un ou plusieurs éléments d'espacement intermédiaires comportant chacun un corps contenant une matière de lestage.

8. Dispositif d'alimentation de fluide suivant l'une quelconque des revendications précédentes comprenant un ensemble bidimensionnel de diffuseurs disposés dans un périmètre de forme en substance rectangulaire, des régions marginales de l'ensemble étant raccordées de façon flexible à des moyens de levage rigides disposés le long d'une paire de bords opposés de l'ensemble pour faciliter le levage de cet ensemble.

9. Procédé pour l'alimentation diffusée de gaz dans un volume de liquide contenu dans un récipient suivant lequel on positionne dans la base du récipient une pluralité de dispositifs d'alimentation de fluide du type natte comprenant chacun une pluralité de diffuseurs raccordés entre eux de manière flexible et on dispose ces dispositifs de manière à couvrir une proportion substantielle de la base du récipient, chaque dispositif d'alimentation de fluide présentant une flottabilité négative intrinsèque et comportant une pluralité de sorties pour l'alimentation diffusée de gaz, et on prévoit des tuyaux flexibles que l'on dispose de manière à raccorder chaque dispositif d'alimentation de fluide à une canalisation d'alimentation de gaz située à l'extérieur du volume occupé ou destiné à être occupé par le liquide.

10. Procédé suivant la revendication 9, dans lequel on utilise des dispositifs d'alimentation de fluide qui sont chacun de nature flexible afin de s'adapter et de se conformer aux irrégularités éventuelles ou aux régions non planes de la base du récipient.
